# EUROPEAN PATENT APPLICATION

(11) **EP 1 867 883 A1**
(43) Date of publication of application: **19.12.2007**
(21) Application number: 06715641.4
(22) Date of filing: 14.03.2006
(51) Int. Cl.: F16C 29/06, F16B 5/08

(54) **FIXING STRUCTURE OF TRACK RAIL IN GUIDING APPARATUS**

(30) Priority: 31.03.2005 JP 2005103688
(71) Applicant: THK CO., LTD., Shinagawa-ku, Tokyo 141-8503 (JP)
(72) Inventor: AIDA, Tomoyuki c/o THK Co., Ltd., Tokyo 141-8503 (JP)
(74) Representative: Grünecker, Kinkeldey, Stockmair & Schwanhäusser Anwaltssozietät
(86) International application number: PCT/JP2006/304982
(87) International publication number: WO 2006/112226

(57) **Abstract**

Provided is a fixing structure of a track rail, which is capable of fixing the track rail to a base portion without using a fixing bolt, in a case of fixing a guiding apparatus composed of the track rail and a slider to the base portion, and particularly suitable for an extremely small-sized guiding apparatus in which it is difficult to process a tap hole. A structure for fixing a track rail (1) of a guiding apparatus to a base portion (6) includes: a filling hole (11) penetrating through the track rail (1) toward the base portion (6); an anchor hole (61) communicating with the filling hole (11) and formed in the base portion (6); and a coupling anchor (7) filled to the filling hole (11) of the track rail (1) and the anchor hole (61) of the base portion (6), followed by curing.

## Description

### TECHNICAL FIELD

The present invention relates to a structure for fixing a track rail to a base portion of a variety of machines, devices, and the like, the track rail relating to a guiding apparatus in which a slider moves along the track rail to convey and guide a variety of movable bodies in a freely reciprocating manner.

### BACKGROUND ART

Heretofore, as a linear guiding apparatus for constructing a liner guide portion of machine tools and various industrial robots, there has been known one composed of a liner track rail on which a ball rotating/running surface is formed along a longitudinal direction, and a slider assembled to the track rail with a large number of balls interposed therebetween. The slider includes a load rotating/running surface opposite to the ball rotating/running surface of the track rail, and a circulation route that endlessly circulates therethrough the large number of balls rotating and running between the load rotating/running surface and the rotating/running surface of the track rail while applying a load therebetween. By circulating the balls in such an endless circulation route, it becomes possible for the slider to continuously move across an overall length of the track rail.

In general, the track rail is fixed to a base portion such as a bed or a column of the machine tool or the like by fastening a fixing bolt thereto. For this purpose, in the track rail, at a predetermined interval along a longitudinal direction thereof, rail attachment holes through which the fixing bolts are inserted are formed in a penetrating manner, or tap holes which are used for screwing the fixing bolts inserted through the base portion are formed (JP 2003-166531 A and the like).

Meanwhile, the range of use of such a guiding apparatus in which the track rail and the slider are combined is not only limited to the machine tools and the industrial robots, but also spread to fields of medical machines, various measuring instruments, and precision instruments. Following this, needs for a small guiding apparatus suitable for light-load use are increased. Further, in recent years, small-sized machines such as a milling machine, a lathe, and a press machine, each of which is miniaturized to a palm size, have also been studied, and needs for such an extremely miniaturized guiding apparatus have been increased also in this point.
Patent Document 1: JP 2003-166531 A

### DISCLOSURE OF THE INVENTION

### PROBLEMS TO BE SOLVED BY THE INVENTION

However, when such a small-sized guiding apparatus is put into practical use, the problem is how to fix the track rail to the base portion. As the guiding apparatus is further miniaturized, a width of the track rail is further narrowed as a matter of course, and a diameter of the fixing bolt for fixing the track rail to the base portion inevitably becomes smaller. Therefore, when the width of the track rail is excessively narrowed, the tap hole for the track rail or the base portion cannot be processed, and it becomes difficult to fix the track rail to the base portion by using the fixing bolts.

A guiding apparatus having a track rail whose width is 3 mm is actually available on the market (LM Guide RSR 3M/manufactured by THK Co., Ltd.). In this guiding apparatus, a tap hole with a nominal diameter of M1.6 is formed in the track rail, whereby the fixing of the track rail to the base portion is realized. However, for example, in a guiding apparatus having a track rail whose width is 1 mm, a hole having a diameter of 0.4 mm can be drilled at maximum, considering that the ball rotating/running surface is formed on each side surface of the track rail, and it is usually difficult to implement a tapping process for the hole. Hence, it is necessary to fix the track rail to the base station by another method than the fastening of the fixing bolts.

As a method of fixing the track rail without using the fixing bolts, there is considered a method of making the track rail adhere to the base station by using an adhesive. However, it is necessary to set a layer thickness of the adhesive to a certain extent or more in order to ensure adhesive strength, and there is a problem that a height of the track rail fixed to the base portion becomes large despite the small-sized guiding apparatus. Further, when the layer thickness of the adhesive is not constant, the track rail undesirably waves, thereby leading to such a fatal problem that running accuracy of the slider decreases.

Further, as still another fixing method, there is considered a method of providing a clamp member for sandwiching the track rail in a width direction thereof, and fixing the clamp member to the base station. However, the clamp member inevitably becomes larger than the width of the track rail, and there are problems that not only the miniaturization of the guiding apparatus is spoiled but also a cost thereof increases.

### MEANS FOR SOLVING THE PROBLEMS

The present invention has been made in view of the above-mentioned problems. It is an object of the present invention to provide a fixing structure of a track rail, which is capable of fixing the track rail to a base portion without using a fixing bolt, in a case of fixing a guiding apparatus composed of the track rail and a slider to the base portion, and particularly suitable for an extremely small-sized guiding apparatus in which it is difficult to process a tap hole.

That is, the present invention relates to a structure for fixing a track rail of a guiding apparatus to a base portion including: a filling hole penetrating through the track rail toward the base portion; an anchor hole communicating with the filling hole and formed in the base portion; and a coupling anchor filled to the filling hole of the track rail and the anchor hole of the base portion, followed by curing.

In accordance with such a fixing structure, it is only necessary to form holes for filling thereto a die-molding material that becomes the coupling anchor in the track rail and the base portion. The die-molding material is filled to those holes formed so as to communicate with each other, followed by curing, whereby the coupling anchor is present so as to extend over the filling hole on the track rail side and the anchor hole on the base portion side. In this way, the track rail and the base portion are integrated together by the coupling anchor, thus making it possible to fix the track rail to the base portion.

Specifically, according to the present invention, even in such a case where the tap hole for fastening the fixing bolts to the track rail and the base portion cannot be processed, it becomes possible to fix the track rail to the base portion.

Fixing strength of the track rail with respect to the base portion depends on an area where the coupling anchor is brought into contact with the filling hole on the track rail side and the anchor hole on the base portion side. If such a contact area becomes larger, the fixing strength of the track rail is enhanced by an increased amount. Further, from a viewpoint of enhancing the fixing strength, it is preferable to form an engagement protrusion on the coupling anchor for the purpose of preventing the coupling anchor from coming off from the filling hole of the track rail or the anchor hole of the base portion. In order to make the coupling anchor include such an engagement protrusion, it is necessary to form a stopper groove on an inner wall of any one of the filling hole and the anchor hole or the inner walls of both of them. If such a stopper groove is formed before filling the die-molding material, the engagement protrusion is formed naturally as the die-molding material is being filled to the filling hole and the anchor hole, and the coupling anchor can be prevented from coming off from the track rail and the base portion. Such a shape change of the filling hole and the anchor hole is appropriately performed according to the required fixing strength of the track rail. If the requirement for the fixing strength of the track rail is not strict, the filling hole and the anchor hole may be holes with an even inner diameter.

Further, the present invention is an effective one when the track rail of the extremely small-sized guiding apparatus in which it is difficult to process the tap hole is fixed to the base portion of the guiding apparatus. As described above, the shape of the filling hole on the track rail side and the shape of the anchor hole on the base portion side are appropriately changed, thus making it possible to sufficiently ensure the fixing strength of the track rail to the base portion. Accordingly, the present invention enables to fix, to the base portion, even a track rail having a size at which the process for the tap hole can be performed. The fixing structure of the track rail according to the present invention does not require the fixing bolt. Accordingly, it is not necessary to perform the tapping process for the track rail side or the base portion side. In addition, the fixing of the track rail is completed only by injecting the die-molding material to the filling hole and the anchor hole. Accordingly, it is possible to embody the fixing structure at low cost in comparison with the conventional fixing structure in which the fixing bolt is fastened. Hence, the fixing structure according to the present invention is a fixing structure effective in track rails with all sizes.

Further, in the fixing structure of the track rail according to the present invention, it is not necessary to perform the tapping process for the base portion side, and accordingly, the fixing structure according to the present invention is an extremely effective one also in a case where it is difficult to perform machining with respect to the base portion.

Still further, it is satisfactory if the die-molding material filled to the filling hole and the anchor hole can be filled as a fluid or a semi-fluid to the filling hole and the anchor hole, is cured after being filled, and maintains a shape thereof. For example, a resin material such as an adhesive, gypsum, cement, paper clay, solder, and the like are considered.

### BRIEF DESCRIPTION OF THE DRAWINGS

FIG. 1 is a perspective view showing an example of a linear guiding apparatus to which the present invention is applicable.
FIG. 2 is a front cross-sectional view showing a first embodiment of a fixing structure of a track rail according to the present invention.
FIG. 3 is a side cross-sectional view showing the first embodiment of the fixing structure of a track rail according to the present invention.
FIG. 4 is a cross-sectional view showing a part of a procedure in a case of embodying the fixing structure according to the first embodiment.
FIG. 5 is a front cross-sectional view showing a second embodiment of the fixing structure of a track rail according to the present invention.
FIG. 6 is a cross-sectional view showing a part of a procedure in a case of embodying the fixing structure according to the second embodiment.
FIG. 7 is a front cross-sectional view showing a third embodiment of the fixing structure of a track rail according to the present invention.
Fig. 8 is a cross-sectional view showing an example of a procedure of forming a stopper groove in an anchor hole.
FIG. 9 is a front cross-sectional view showing a fourth embodiment of the fixing structure of a track rail according to the present invention.

### DESCRIPTION OF REFERENCE NUMERALS

1 ...track rail, 2 ... slider, 6 ... base portion, 7 ... coupling anchor, 11 ... filling hole, 61 ... anchor hole

### BEST MODE FOR CARRYING OUT THE INVENTION

A description of a fixing structure of a track rail according to the present invention will be made below in detail referring to the accompanying drawings.

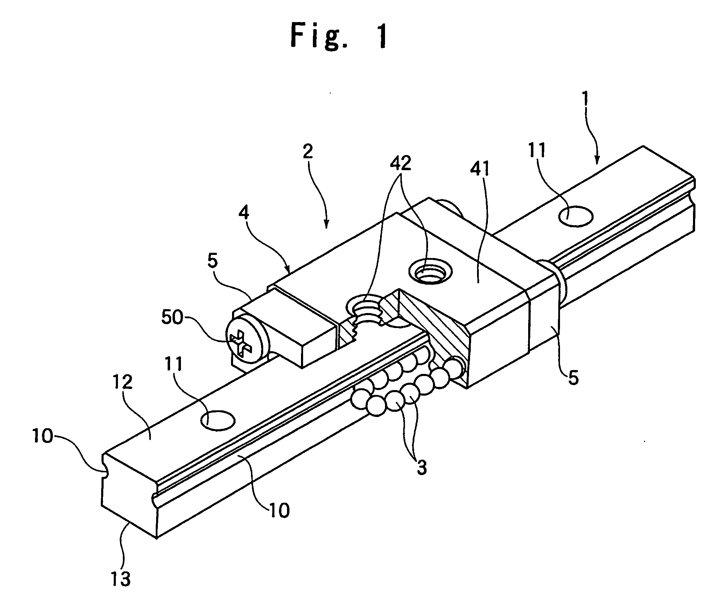

FIG. 1 is a view showing an example of a linear guiding apparatus including a track rail fixable to a base station by using the present invention. The linear guiding apparatus is composed of a track rail 1 disposed on a base portion, and a slider 2 freely movable along the track rail 1. The slider 2 is made freely movable on the track rail 1 fixed to the base portion.

In the track rail 1, a cross section perpendicular to a longitudinal direction thereof is formed to be substantially rectangular, and a ball rotating/running groove 10 on which balls 3 rotate and run is formed on each of side surfaces thereof. Further, in the track rail 1, filling holes 11 are formed at an appropriate interval in the longitudinal direction, and the filling holes are formed so as to penetrate from a top surface 12 of the track rail to a bottom surface 13 thereof.

Meanwhile, the slider 2 is composed of a stainless steel-made moving block 4 having tap holes 42 to which an attachment surface 41 of a movable body such as a table and fixing bolts of the movable body are screwed, and a pair of synthetic resin-made cap bodies 5 and 5 fixed to both front and rear end surfaces of the moving block 4. The cap bodies 5 are fixed to the moving block 4 by using an attachment bolt 50, whereby each endless circulation route of the balls 3 is provided in the slider.

The moving block 4 is formed into a substantial saddle shape in cross section, and is disposed so as to straddle the track rail 1. The balls 3 rotate and run between the moving block 4 and the ball rotating/running grooves 10 formed on both side surfaces of the track rail 1 while applying loads therebetween. In this way, the slider 2 that mounts the movable body thereon is freely movable along the track rail 1 while applying a load thereto. Further, the balls 3 circulate in each endless circulation route, whereby the slider 2 becomes freelymovable along the track rail 1 without imposing limitations on a stroke.

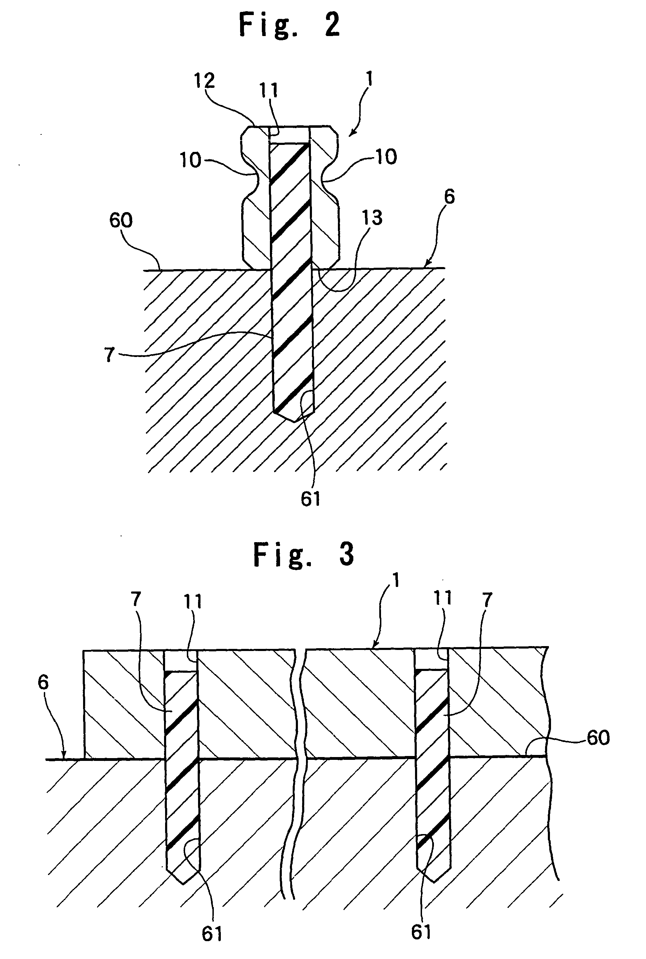

FIGS. 2 and 3 are a front cross-sectional view and a side cross-sectional view showing a fixing structure of the track rail 1 with respect to a base portion 6. In the track rail 1, filling holes 11 each of which vertically penetrates therethrough is formed, and the filling hole 11 is formed with a constant inner diameter from the top surface 12 of the track rail 1 to the bottom surface 13 thereof. Meanwhile, the base portion 6 has a flat attachment surface 60 to which the track rail 1 is fixed, and in the attachment surface 60, an anchor hole 61 corresponding to each filling hole 11 of the track rail 1 is formed perpendicularly. In the example shown in FIGS. 2 and 3, the anchor hole 61 is evenly formed with the same diameter as that of the filling hole 11, and is not subjected to a tapping process or the like.

In a state where the track rail 1 is disposed at a predetermined position on the base portion 6, each filling hole 11 on the track rail 1 side and each anchor hole 61 on the base portion 6 side communicate with each other. Into insides of the filling hole 11 and the anchor hole 61, one coupling anchor 7 is inserted so as to extend over both thereof. The coupling anchor 7 is one formed in such a manner that a die-molding material in a fluid state is filled to the filling hole 11 of the track rail 1 from an upper opening thereof, and is kept being filled to the anchor hole 61 of the base portion 6 and the filling hole 11 of the track rail 1, followed by curing. Hence, the coupling anchor 7 is formed into just the same shape as those of the anchor hole 61 of the base portion 6 and the filling hole 11 of the track rail 1, and is brought into close contact with inner walls of the anchor hole 61 and the filling hole 11.

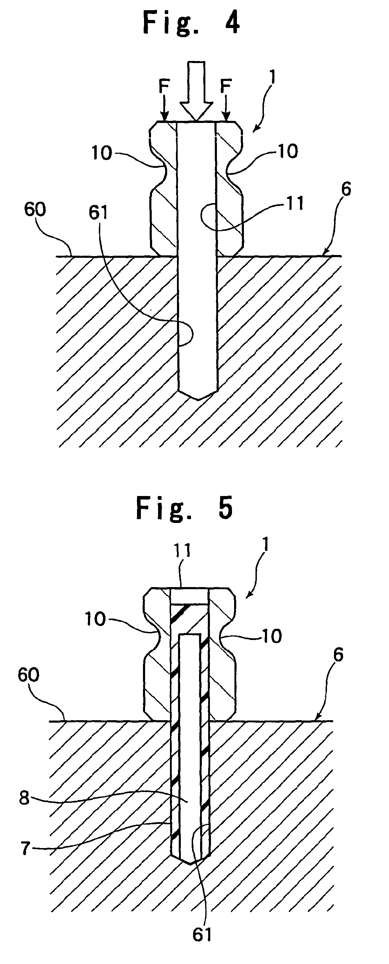

As the die-molding material that forms the coupling anchor 7, for example, a resin material, gypsum, cement, paper clay, solder, and the like are considered, and in this example, an adhesive of a biliquid room-temperature curing type is used. As shown in FIG. 4, the adhesive is filled to the filling hole 11 and the anchor hole 61 in such a manner that the bottom surface of the track rail 1 is pressed against the attachment surface 60 of the base portion 6 with a predetermined force F, the filling hole 11 on the track rail 1 side and the anchor hole 61 on the base portion 6 side are made to completely communicate with each other, then two liquids of the adhesive are injected by an applicator while being mixed together, and the adhesive is poured into the insides of the filling hole 11 and the anchor hole 61 from the upper opening of the filling hole 11 as shown by the outline arrow in the drawing.

Then, when the poured adhesive is cured, the coupling anchor 7 brought into close contact with the filling hole 11 on the track rail 1 side and the anchor hole 61 on the base portion 6 side is formed. Although differing depending on types, shear strength of a general adhesive is approximately 10 to 40 MPa, and as a surface area of the hole to which the coupling anchor 7 is filled is further increased, drag against force to pull out the anchor 7 becomes larger. For example, in the case of using, as the coupling anchor 7, an adhesive with shear strength of 30 Mpa, when the adhesive is filled to the anchor hole 61 having an inner diameter of 0.4 mm and a depth of 1.4 mm, followed by the curing, and the adhesive is formed as the coupling anchor 7, the drag against the pulling out of the coupling anchor 7 becomes approximately 52.8 N. This value is one regarding one filling hole 11 and one anchor hole 61. When the plurality of filling holes 11 are provided on one track rail 1, and the anchor holes 61 whose number corresponds to that of those are provided in the base portion 6, the drag becomes much larger. Hence, if the number of filling holes 11 formed in the track rail 1 is selected in response to a range of use of the liner guiding apparatus, it becomes possible to fix the track rail 1 onto the fixed base 6 with sufficient strength.

Note that, in FIGS. 2 and 3, the coupling anchors 7 are not present up to opening edges of the filling holes 11 of the track rail 1, but are present at positions slightly lower than the top surface 12 of the track rail 1. This is for preventing the adhesive from squeezing out to the top surface 12 of the track rail 1 and being cured when the adhesive is filled to the filling holes 11 to form the coupling anchors 7. If the adhesive squeezes out to the top surface 12 of the track rail 1 and is cured, the movement of the slider 2 along the track rail 1 will be inhibited. Hence, in a case where the adhesive is injected into the filling holes 11, and the adhesive that has squeezed out to the top surface 12 of the track rail 1 is subsequently wiped off by using a scraper and the like, the adhesive may be injected up to the opening edges of the filling holes 11.

FIG. 5 is a view showing a second embodiment of the fixing structure of the track rail 1 of the present invention.

In an example shown in FIG. 5, a reinforcement pin 8 is provided in an inside of the coupling anchor 7, and the coupling anchor 7 is made capable of exerting sufficient drag when force in a direction along the attachment surface 60 of the base portion 6 is applied to the track rail 1. As the reinforcement pin 8, one formed of a metal material, a resin material reinforced by carbon filler and the like, or the like can be used. However, it is necessary that the coupling anchor 7 be present so as to extend over the anchor hole 61 on the base portion 6 side and the filling hole 11 on the track rail 1 side, and accordingly, it is necessary that the coupling anchor 7 be longer than the depth of the anchor hole 61 on the base portion 6 side.

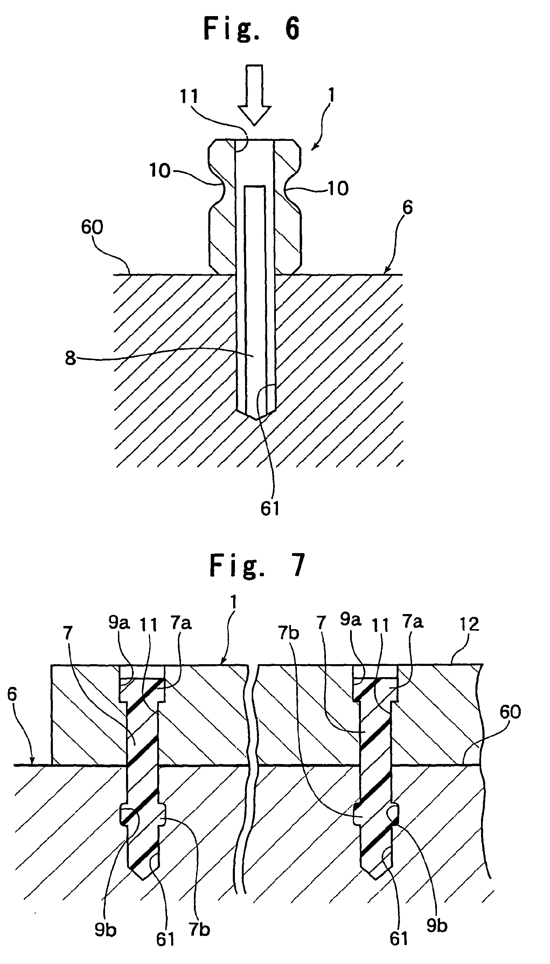

As shown in FIG. 6, the reinforcement pin 8 is inserted into the anchor hole 61 of the base portion 6 before injecting the adhesive into the filling hole 11 of the track rail 1. Then, by a similar procedure to that in the case shown in FIG. 4, where the reinforcement pin 8 is not provided, the adhesive is injected into the anchor hole 61 of the base portion 6 through the filling hole 11 of the track rail 1. Then, when the adhesive is cured in the insides of the filling hole 11 and the anchor hole 61, and the coupling anchor 7 is thereby formed, a state where the reinforcement pin 8 is integrated with the coupling anchor 7 is brought, and as shown in FIG. 5, the track rail 1 is stably fixed to the base portion 6.

In order to make the integration of the die-molding material that forms the coupling anchor and the reinforcement pin stable, irregularities may be provided on a surface of the reinforcement pin. In particular, in the case of using gypsum, cement, or the like as the die-molding material, in order to make it possible to sufficiently apply a reverse radial load applied by the coupling anchor to the track rail, it is preferable that, as in this embodiment, the reinforcement pin be provided in the coupling anchor, and the irregularities be formed on the surface of the reinforcement pin in order to stably integrate the reinforcement pin and the die-molding material.

FIG. 7 is a view showing a third embodiment of the fixing structure of the track rail 1 of the present invention.

In an example shown in FIG. 7, for the purpose of positively preventing the coupling anchor 7 from coming off from each filling hole 11 of the track rail 1 and each anchor hole 61 of the base portion 6 when an excessive load in a direction of lifting up the track rail 1 from the base portion 6 is applied to the track rail 1, stopper grooves 9a and 9b are provided in each filling hole 11 and each anchor hole 61.

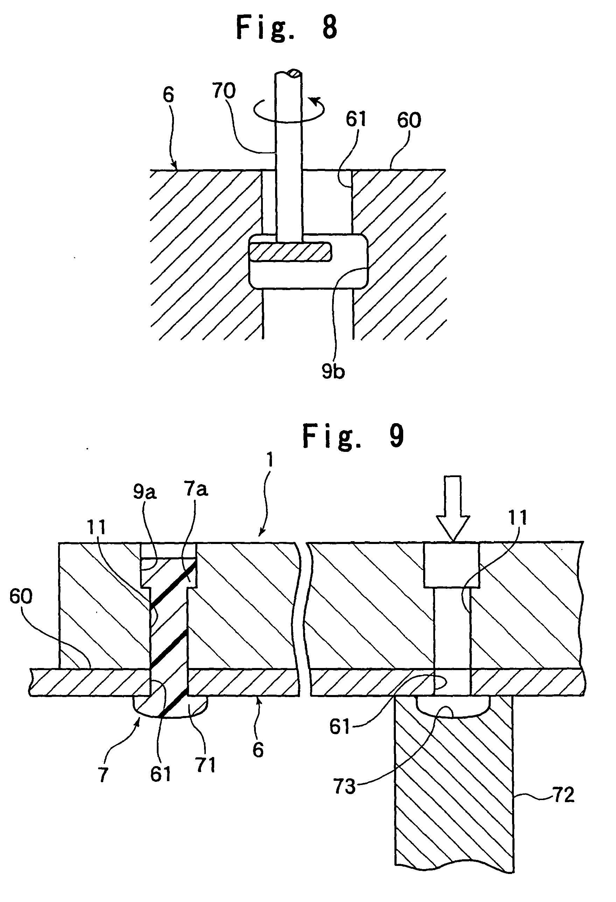

Specifically, in each filling hole 11 of the track rail 1, the stopper groove 9a larger in inner diameter than the filling hole 11 is formed in the opening edge in the top surface 12. Meanwhile, in each anchor hole 61 of the base portion 6, the stopper groove 9b is formed in the inside thereof apart from the attachment surface 60. The stopper groove 9b of the anchor hole 61 can be formed in such a manner that, after the anchor hole 61 is drilled, as shown in FIG. 8, an end mill 70 is inserted into the inside of the anchor hole 61, and the inner wall of the anchor hole 61 is chipped off by using the end mill 70.

Then, after the stopper grooves 9a and 9b are formed as described above, in a similar way to the method shown in FIG. 4, the track rail 1 is pressed against the base portion 6, and the adhesive is filled to the anchor hole 61 of the base portion 6 through the filling hole 11 of the track rail 1. In this way, as shown in FIG. 7, each coupling anchor 7 is formed, which includes engagement protrusions 7a and 7b entering the stopper groove 9a on the track rail 1 side and the stopper groove 9b on the base portion 6 side, respectively. When the track rail 1 is fixed by the coupling anchors 7, each of which includes the engagement protrusions 7a and 7b, even if force to lift up the track rail 1 from the base portion 6 is excessively applied to the track rail 1, the coupling anchors 7 do not come off from the filling holes 11 of the track rail 1 and the anchor holes 61 of the base portion 6 as long as the coupling anchors 7 are not ruptured. Accordingly, in comparison with the first embodiment shown in FIG. 3, the track rail 1 can be fixed to the base portion 6 remarkably stably.

Note that it is not always necessary that each stopper groove 9b in the inside of the anchor hole 61 be formed by the chipping using the end mill 70, and for example, the stopper groove 9b may be formed by forming a spiral groove on the inner wall of the anchor hole 61 as in the tapping process.

FIG. 9 is a view showing a fourth embodiment of the fixing structure of the track rail 1 of the present invention.

The fourth embodiment illustrates an example of the fixing structure in the case where the base portion 6 is a plate member such as an iron plate. When the base portion 6 is the plate member, the depth of each anchor hole 61 cannot be ensured sufficiently. If only through holes are formed in the base portion 6, the adhesive is filled to the through holes, and the coupling anchors 7 are thereby formed, the coupling anchors 7 easily come off from the base portion 6 when the load in the direction of lifting up the track rail 1 is applied to the track rail 1.

Accordingly, in the example shown in FIG. 9, while the anchor holes 61 are formed in the plate-like base member 6 in a penetrating manner, the coupling anchors 7 are made to include engagement head portions 71 located on a back surface side of the base portion 6, and the coupling anchors 7 are prevented from coming off from the through holes 61 of the base portion 6. A diameter of each engagement head portion 71 is larger than an inner diameter of each anchor hole 61 formed in the base portion 6 in a penetrating manner. Accordingly, even if the coupling anchors 7 are pulled from the track rail 1 side, the coupling anchors 7 do not come off from the anchor holes 61. Further, the stopper groove 9a is formed in each filling hole 11 of the track rail 1 in a similar manner to that of the third embodiment, and each engagement protrusion 7a of the coupling anchor 7 is housed in the stopper groove 9a.

As a method of making the coupling anchor 7 include the engagement head portion 71, as shown in FIG. 9, a jig 72 including a cavity 73 corresponding to a shape of the engagement head portion 71 is used, and the jig 72 is pressed against the back surface side of the plate-like base portion 6 and covers the anchor hole 61 formed in the base portion 6 in a penetrating manner, and thereafter, the adhesive injection is performed from the filling hole 11 of the track rail 1 to fill the adhesive to the cavity 73 of the jig 72, the anchor hole 61, and the filling hole 11. When the adhesive is cured, each coupling anchor 7 including the engagement head portion 71 and the engagement protrusion 7a is formed.

In accordance with the fixing structure shown in the fourth embodiment, even if the base portion 6 is the plate-like member, the fixing structure of the present invention is embodied, and it is possible to stably fix the track rail 1 to the base portion 6 without using fixing bolts.

Note that, the description has been made of the case of fixing the track rail of the linear guiding apparatus to the base portion thereof in each of the above-described embodiments, but the track rail is not limited to the linear one, and may be a curved one that is curved with a fixed curvature.

## Claims

1. A structure for fixing a track rail (1) of a guiding apparatus to a base portion (6), comprising:
a filling hole (11) penetrating through the track rail (1) toward the base portion (6);
an anchor hole (61) communicating with the filling hole (11) and formed in the base portion (6); and
a coupling anchor (7) filled to the filling hole (11) of the track rail (1) and the anchor hole (61) of the base portion (6), followed by curing.

2. The structure for fixing a track rail according to claim 1, wherein a stopper groove (9a, 9b) for the coupling anchor (7) is formed on an inner wall of the anchor hole (61) and/or an inner wall of the filling hole (11).

3. The structure for fixing a track rail according to claim 1, wherein a reinforcement pin (8) present to extend over the filling hole (11) and the anchor hole (7) is provided in the coupling anchor (7).

4. The structure for fixing a track rail according to claim 1, wherein the base member (6) is a plate-like member, the anchor hole (61) is formed in the base portion (6) in a penetrating manner, and meanwhile, the coupling anchor (7) includes an engagement head portion (71) protruding from the anchor hole (61) on a back surface side of the base portion (6).

5. A method of fixing a track rail (1) of a guiding apparatus to a base portion (6), comprising:
forming, in the track rail (1), a filling hole (11) penetrating toward the base portion (6);
forming, in the base portion (6), an anchor hole (61) communicating with the filling hole (11); and
filling, in a state where a bottom surface of the track rail (1) is brought into close contact with the base portion (6), a die-molding material to the anchor hole (61) of the base portion (6) from the filling hole (11) of the track rail (1), and curing the die-molding material, thereby forming a coupling anchor (7) extending from the anchor hole (61) to the filling hole (11).

6. The method of fixing a track rail according to claim 5, wherein, before filling the die-molding material to the filling hole (11) of the track rail (1), a stopper groove (9a, 9b) for the coupling anchor (7) is formed on an inner wall of the anchor hole (61) and/or an inner wall of the filling hole (11).

7. The method of fixing a track rail according to claim 5, wherein, before filling the die-molding material, a reinforcement pin (8) longer than a depth of the anchor hole (61) is inserted into the anchor hole (61) from the filling hole (11) of the track rail (1).

8. The method of fixing a track rail according to claim 5, wherein the base member (6) is a plate-like member, the anchor hole (61) is formed in the base portion (6) in a penetrating manner, and mean while, when the die-molding material is filled, a jig covering the anchor hole (61) is pressed against a back surface side of the base portion (6), and the coupling anchor (7) is made to include an engagement head portion (71) protruding from the anchor hole (61) on the back surface side of the base portion (6).
